# EUROPÄISCHE PATENTSCHRIFT

(11) **EP 0 518 165 B1**
(45) Veröffentlichungstag und Bekanntmachung des Hinweises auf die Patenterteilung: **06.09.1995**
(21) Anmeldenummer: 92109230.0
(22) Anmeldetag: 02.06.1992
(51) Int. Cl.: B62D 29/04, B62D 49/06

(54) **Fahrzeugaufbau**
Vehicle bodywork
Superstructure de véhicule

(30) Priorität: 14.06.1991 US 715204
(43) Veröffentlichungstag der Anmeldung: 16.12.1992
(73) Patentinhaber: DEERE & COMPANY, Moline, Illinois 61265 (US)
(72) Erfinder: Hutchison, Wayne Robert, Mayville, Wisconsin 53050 (US); Teal, Richard Donald, Horicon, Wisconsin 53032 (US); Moore, Earl Thomas, Midland, Michigan 48640 (US); Lorenzo, Luis, Midland, Michigan 48640 (US); Coffey, Michael John, Sanford, Michigan 48657 (US); Wasson, Steven Charles, Midland, Michigan 48640 (US); Mirdamadi, Mansour, Midland, Michigan 48640 (US); Nickels, Daniel Robert, Monroe, New York 10950 (US)
(74) Vertreter: Feldmann, Bernhard

(56) Entgegenhaltungen:
- DE-A- 3 011 428
- DE-C- 1 134 617
- GB-A- 1 253 202
- US-A- 2 242 269
- US-A- 2 326 952

## Beschreibung

Die Erfindung bezieht sich auf einen Fahrzeugaufbau mit einem Oberteil und einem Grundrahmenteil, die aus einem Kunststoff bestehen und miteinander verbindbar sind, wobei die Verbindungsmittel aus mindestens einem Schenkelteil und einem Kanal bestehen, wobei der Schenkelteil in den Kanal einsetzbar, mit diesem verklebbar und am Oberteil oder am Grundrahmenteil vorgesehen ist, während der Kanal am Grundrahmenteil oder am Oberteil vorgesehen ist.

Fahrzeuge, insbesondere solche, die in der Garten- und Grundstückspflege eingesetzt werden, haben einen aus einem metallischen Werkstoff bestehenden Grundrahmen, um den auf das Fahrzeug einwirkenden Belastungen standhalten zu können (US-A-4 969 533). Der Grundrahmen nimmt die einzelnen Fahrzeugkomponenten, wie einen Verbrennungsmotor, ein Endgetriebe usw. auf, die durch einen Oberteil, wie eine Haube, abgedeckt werden. Bei einigen Ausführungen ist die Haube aus einem Kunststoff gefertigt. Bei einer Herstellung aus Metall werden die einzelnen Teile geschnitten oder gestanzt und miteinander verbunden. Eine derartige Fertigung ist zeitaufwendig und kostenungünstig. Einige Hersteller haben deshalb alternative Herstellungsmöglichkeiten, wie Fiber verstärkten Kunststoff, eingesetzt. Bei solchen Bauweisen wurde aber immer noch ein metallisches Skelett verwendet, an dem die Kunststoffbauteile befestigt wurden.

Bei dem bekannten Fahrzeugaufbau, von dem die Erfindung ausgeht (GB-A-1 209 714), sind bei einem Personenkraftwagen an dem als Chassis ausgebildeten Grundrahmenteil flache Endaufleger vorgesehen, auf die entsprechende Gegenstücke des Oberteils aufgesetzt und verklebt werden. Zur Verstärkung müssen in den Grundrahmenteil und in den Oberteil Versteifungsrohre eingegossen werden. Abgesehen von den nicht erwünschten Metallteilen ist nicht erkennbar, wie bei einem Zusammenbau der Oberteil zu dem Unterteil in einfacher Weise ausgerichtet werden kann.

Auch ist bereits vorgeschlagen worden (DE-A1-3011 428), den ein Reserverad aufnehmenden Unterteil eines Kofferraumes aus Kunststoff herzustellen. Dieser Unterteil ist im Querschnitt U-förmig ausgebildet und an einer Seite mit zwei schmalen Zungen versehen, die nach einem Kleberauftrag in entsprechende Aussparungen in Rahmenteilen der Fahrzeugkarosserie eingeführt werden. An seiner anderen Seite ist der Unterteil mit mehreren Rasten versehen, deren Köpfe nach einer Schwenkbewegung und nach Überwindung eines Widerstandes in einen zweiten Rahmenteil eintreten und den Unterteil provisorisch festlegen. Die Zungen und Rasten sollen den Unterteil toleranzgenau festlegen und verlieren ihre Bedeutung, sobald ein Kleber an zusätzlichen umlaufenden Flächen ausgehärtet ist.

Die mit der Erfindung zu lösende Aufgabe wird in einem aus wenigstens zwei Teilen bestehenden Fahrzeugaufbau gesehen, der in einfacher Weise zusammensetzbar ist, in Leichtbauweise hergestellt werden kann und Verbindungsstellen aufweist, die den beim Einsatz auftretenden Belastungen standhalten. Diese Aufgabe ist nach der Erfindung dadurch gelöst, daß im Bereich von Außenkanten des Oberteils und des Grundrahmenteils und mit Abstand zu dem Schenkelteil und dem Kanal an dem Oberteil oder dem Grundrahmenteil Verriegelungsschultern, an dem Grundrahmenteil oder an dem Oberteil flexible Feststellteile und an dem Oberteil und an dem Grundrahmenteil geneigt angeordnete und sich in Fahrzeuglängsrichtung erstreckende Flächen vorgesehen sind, die in einem spitzen Winkel von den Verriegelungsschultern bzw. von den Feststellteilen abstehen, um V-förmige Verbindungsflächen zu bilden, die im montierten Zustand ineinandergreifen und miteinander verbindbar sind, wobei die geneigt angeordneten Flächen im montierten Zustand zueinander parallel verlaufen und miteinander verklebt sind. Auf diese Weise wird bei Beibehaltung einer Leichtbauweise der Oberteil auf den Grundrahmenteil in einfacher Weise festgelegt.

Der Schenkelteil ist in einem Kanal einsetzbar, wobei zweckmäßig ein erster und ein zweiter in den Kanal einsetzbarer Schenkelteil vorgesehen sind und zwischen den Schenkelteilen ein Klebemittel aufnehmender Sammelraum vorgesehen ist. Die beiden Schenkelteile werden somit durch Kleben miteinander verbunden, was ebenso für die Verbindung zwischen Verriegelungsschulter und Feststellteil zutrifft, wenn ferner ein Klebemittel aufnehmender Sammelraum zwischen der Verriegelungsschulter und dem Feststellteil vorgesehen ist.

Vorteilhaft kann der Grundrahmenteil aus einem Fiber verstärkten Kunststoff bestehen.

Die Erfindung kann außerdem noch vorsehen, daß zwischen Verriegelungsschulter und Feststellteil ein deren gegenseitige Bewegung begrenzender Anschlagteil vorgesehen ist. An diesem Anschlagteil staut sich auch das Klebemittel auf, das dadurch noch in diesem Bereich für eine zusätzliche Verbindung sorgt. Der Anschlagteil nimmt außerdem die nach unten wirkenden Belastungen des Oberteiles auf, so daß diese nicht ausschließlich von der Klebeverbindung aufgefangen werden müssen.

Nach der Erfindung wird ferner noch vorgeschlagen, daß ein erster und ein zweiter Satz Verriegelungsschultern und Feststellteile vorgesehen ist und jeder Satz mit seitlichem Abstand zu einer Längsmittelebene des Fahrzeugaufbaues angeordnet ist.

Eine seitenstabile Verbindung von Oberteil und Grundrahmenteil kann dadurch erreicht werden, daß der Kanal U-förmig ausgebildet, in der Längsmittelebene des Grundrahmenteils vorgesehen und bodenwärts geschlossen ist, wobei die Schenkelteile an dem Oberteil vorgesehen sind und von diesem aus gesehen nach unten weisen. Die Schenkelteile brauchen dann nur in den Kanal eingesetzt zu werden und können mit diesem verklebt werden, wenn in dem Kanal ein Klebemittel aufnehmender Sammelraum vorgesehen ist.

Ferner kann nach der Erfindung noch vorgesehen werden, daß im frontseitigen Bereich des Oberteils und des Grundrahmenteils erste und zweite und dritte, zueinander Längsabstand aufweisende und sich seitlich erstreckende Verbindungsflächen vorgesehen sind, wobei die ersten und zweiten Verbindungsflächen Abstandshöcker zur Kontrolle der Klebstoffmenge aufweisen, während die dritten Verbindungsflächen im wesentlichen flach ausgebildet sind.

Eine weitere Verbindung kann nach der Erfindung außerdem dadurch erreicht werden, daß der Oberteil und der Grundrahmenteil sich im wesentlichen vertikal und in Fahrzeugaufbaulängsrichtung erstreckende Verbindungsflächen aufweisen, die gegeneinander anliegen und zu einer Längsmittelebene des Fahrzeugaufbaus seitlichen Abstand aufweisen. Diese Verbindungsflächen unterstützen die seitliche Stabilisierung, wobei zusätzlich zwischen den sich im wesentlichen vertikal erstreckenden Verbindungsflächen ein Rastzahn und eine Nut vorgesehen sein kann.

Als vorteilhaft wird es ferner noch angesehen, daß jede Verriegelungsschulter mit einer schräg nach außen geneigten Verbindungsfläche und jeder Feststellteil mit einer schräg nach innen geneigten Verbindungsfläche versehen ist, die in Fahrzeugaufbaulängsrichtung sich erstrecken, gegeneinander anliegen und zur Fahrzeugaufbaulängsmittelebene seitlichen Abstand aufweisen. Die Verriegelungsschulter und der Feststellteil sind damit im wesentlichen V-förmig ausgebildet, wobei ihre Verbindungsflächen miteinander verklebt werden. Sie liegen vorteilhaft an den Fahrzeugaußenseiten und versteifen diese, so daß auch beim Einwirken von äußeren seitlichen Kräften keine Beschädigungen auftreten können.

Der Oberteil kann aus zwei Halbschalen bestehen, die jeweils einen nach unten weisenden Schenkelteil aufweisen, die miteinander verklebbar sind. Damit wird der gesamte Fahrzeugaufbau aus lediglich drei einzelnen Teilen gebildet, die alle aus Kunststoff gegossen werden können, wobei die beiden Halbschalen zunächst zu dem Oberteil verklebt werden, der dann anschließend mit dem einstückigen Grundrahmenteil über ein Klebemittel verbunden wird. Der Oberteil kann dabei noch mit einer geteilten und nach oben weisenden Steuersäule versehen sein, die sich überlappende und miteinander verklebbare Zungen aufweist. Die Zungen werden derart miteinander verklebt, daß eine bündige Außenhaut entsteht.

Um die sich vertikal erstreckenden Verbindungsflächen ausreichend zu stabilisieren, kann nach der Erfindung noch vorgesehen werden, daß die sich im wesentlichen vertikal erstreckenden Verbindungsflächen am Grundrahmenteil durch eine quer verlaufende Wand an ihrem rückwärtigen Ende stabilisiert sind, die seitliche Verbindungsflächen aufweist, die gegen Verbindungsflächen am Oberteil anliegen.

Ferner sieht die Erfindung noch vor, daß beiderseits des U-förmigen Kanals je eine in Fahrzeuglängsrichtung verlaufende und im wesentlichen waagerechte Verbindungsfläche und mit seitlichem Abstand zu diesen Verbindungsflächen noch je eine weitere sich in Fahrzeugaufbaulängsrichtung erstreckende Verbindungsfläche vorgesehen ist, wobei die beiden außen liegenden Verbindungsflächen einen Kanal für Klebemittel aufweisen und alle vier Verbindungsflächen mit Gegenflächen am Oberteil verbindbar sind.

Schließlich wird nach der Erfindung noch vorgeschlagen, daß die sich im wesentlichen vertikal erstreckenden Verbindungsflächen am Grundrahmenteil oberhalb der V-förmig oder etwa V-förmig ausgebildeten Verriegelungsschultern nach innen versetzt angeordnet sind, wobei die Verbindungsflächen der Feststellteile über je eine Außenwand mit ihren gegen die sich im wesentlichen vertikal erstreckenden Verbindungsflächen anliegenden Verbindungsflächen verbunden sind, die an ihrem unteren Ende in die Feststellteile ausläuft, die bis zu den frontseitigen und quer verlaufenden Verbindungsflächen sich nach vorne erstrecken.

In der Zeichnung ist ein nachfolgend näher erläutertes Ausführungsbeispiel der Erfindung dargestellt. Es zeigt:
- Fig. 1: einen mit einem Grundrahmen verbundenen Fahrzeugaufbau, der aus zwei Teilen besteht,
- Fig. 2: den Grundrahmen,
- Fig. 3: einen Schnitt nach der Linie 3 : 3 in Fig. 1, in dem obere und untere Verbindungsstellen für Grundrahmen und Fahrzeugaufbau im Bereich eines den Fahrersitz aufnehmenden Raumes wiedergegeben sind,
- Fig. 4: einen Schnitt nach der Linie 4:4 in Fig. 1 durch eine Steuersäule,
- Fig. 5: einen Schnitt nach der Linie 5:5 in Fig. 1,
- Fig. 6: das linke Ende der Fig. 5 im vergroßerten Maßstab,
- Fig. 7: seitliche vordere Verbindungsstellen im Schnitt nach der Linie 7 : 7 in Fig. 1,
- Fig. 8: einen Schnitt nach der Linie 8 : 8 in Fig. 1 und
- Fig. 9: ein in Integralbauweise gefertigtes Fahrzeug für die Garten- und Landschaftspflege.

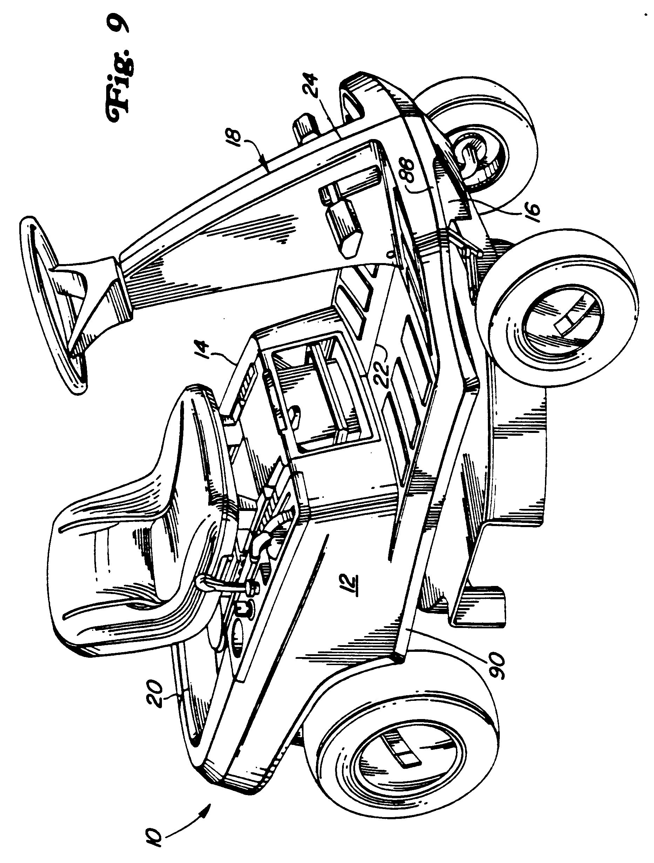

Das in Fig. 9 dargestellte Fahrzeug 10 ist in unserer EP-A1-0 518 201 die die Priorität der US Anmeldung vom 14.06.1991 mit dem Aktenzeichen Nr. 715 933 in Anspruch nimmt, im einzelnen beschrieben. Auf diese Anmeldung wird ausdrücklich für weitere Einzelheiten Bezug genommen.

Der Fahrzeugaufbau des Fahrzeuges 10 besteht aus drei Teileinheiten, und zwar aus einer rechten und einer linken Halbschale 12 und 14 und aus einem unteren Teil oder einem Grundrahmen 16. Die beiden Halbschalen 12 und 14 werden zu einem oberen Teil 26 vereinigt, der mit dem unteren Teil 16 verbunden wird.

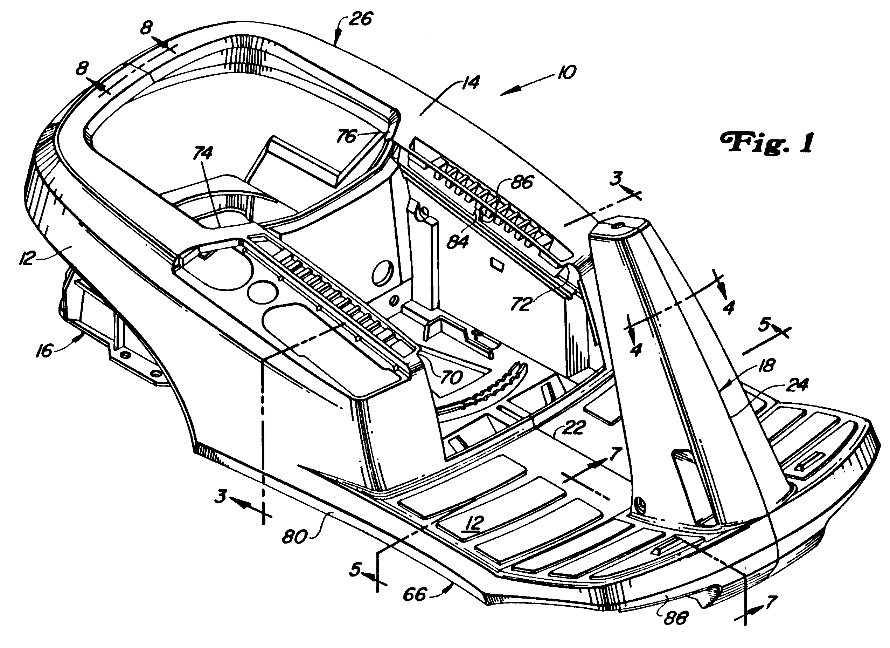

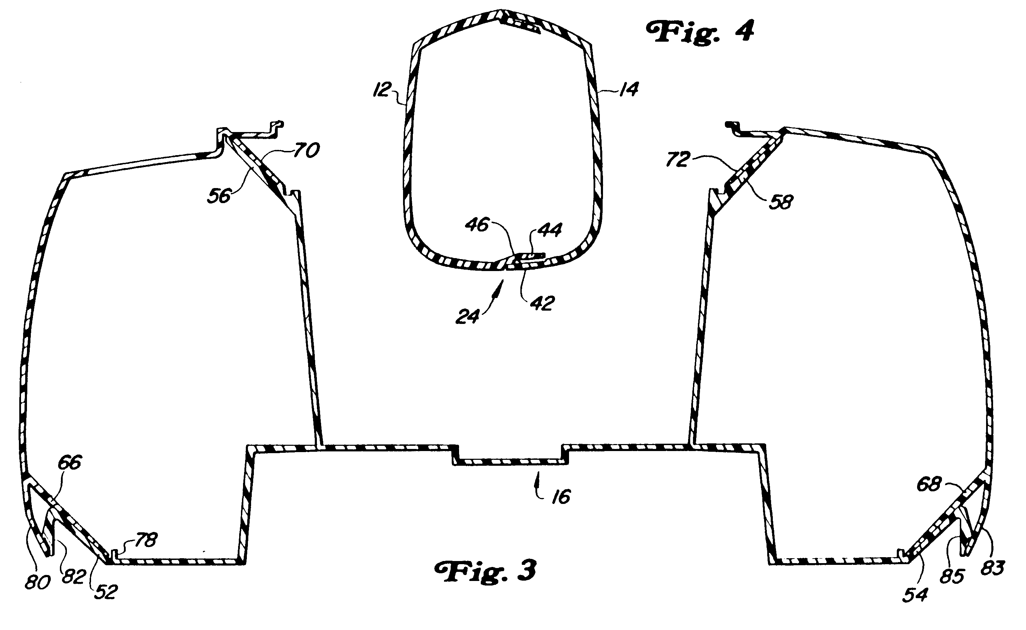

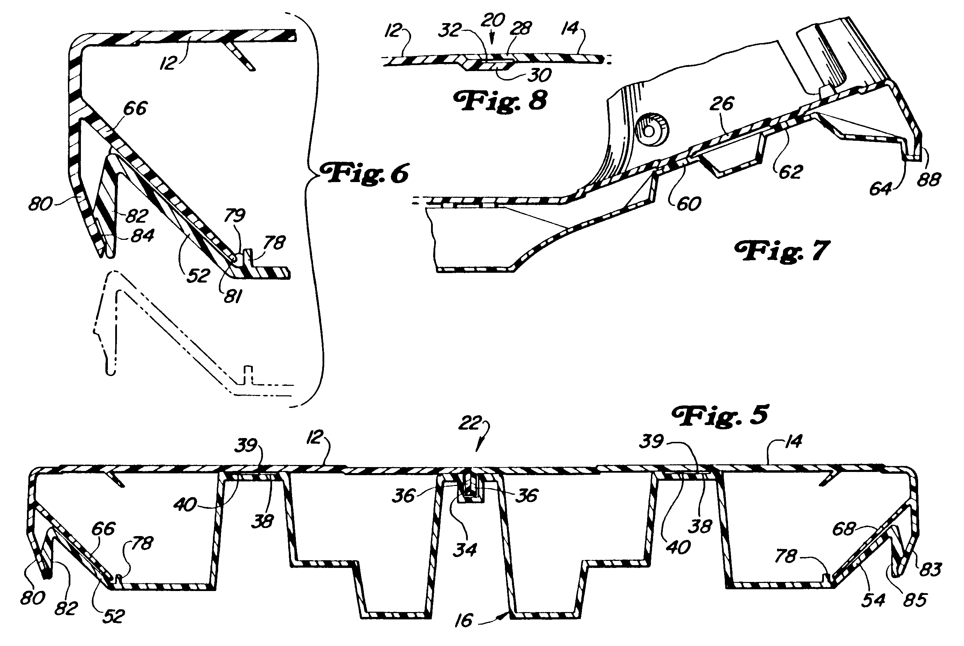

In den Fig. 1 und 9 sind die sich in Fahrzeuglängsrichtung erstreckenden Nahtstellen zwischen den beiden Halbschalen 12 und 14 erkennbar. Die Gesamtnaht ist mit 18 bezeichnet, eine rückwärtige Naht, die in Fig. 8 dargestellt ist, ist mit 20, eine mittige Naht, die in Fig. 5 dargestellt ist, ist mit 22 und eine frontseitige Naht, die in Fig. 4 dargestellt ist, ist mit 24 bezeichnet.

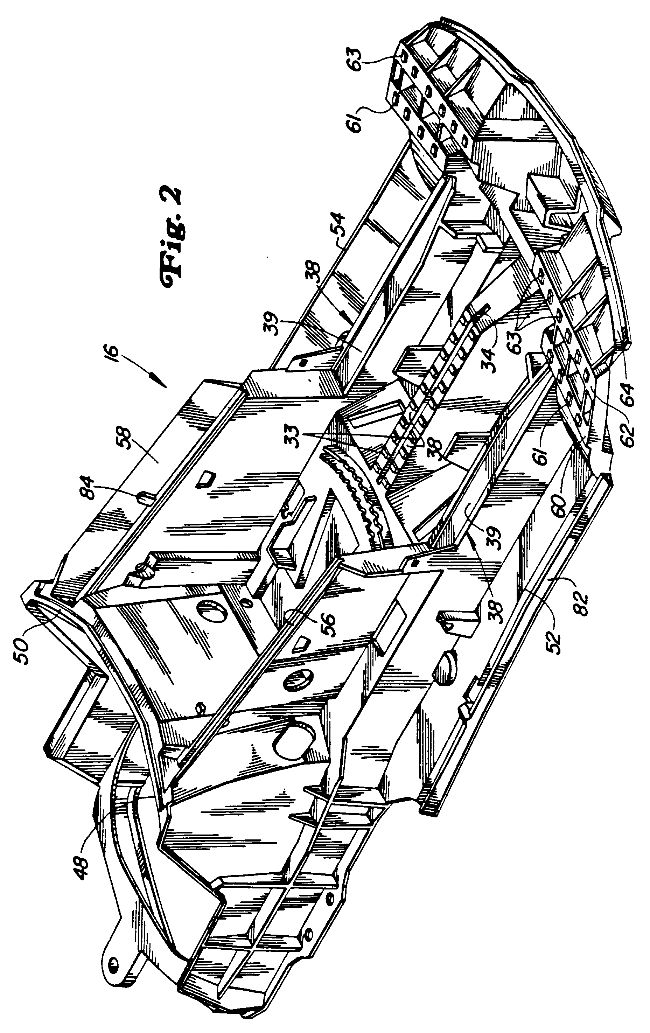

In Fig. 8 ist die rückwärtige Verbindung zwischen den beiden Halbschalen 12 und 14 erkennbar, wobei das rückwärtige Ende des Oberteils 26 freitragend nach rückwärts übersteht und nicht unmittelbar mit dem Grundrahmen 16 verbunden ist. Die beiden Halbschalen 12 und 14 sind hier entsprechend ausgespart, um einen freien Zugang zu einem Verbrennungsmotor zu ermöglichen. Zur Verbindung der beiden Halbschalen in diesem Bereich sind an der Halbschale 12 eine nach innen versetzte Zunge 30 und an der Halbschale 14 eine bündig mit der Halbschale 12 abschließende Zunge 28 vorgesehen, die zwischen sich einen Spalt 32 für eine ausreichende Klebemittelaufnahme offen lassen. Der Spalt dient außerdem der veränderlichen Spannungsdehnung der aus Kunststoff bestehenden Halbschalen durch Feuchtigkeit und Wärme. Zwischen den beiden Zungen 28 und 30 sind außerdem noch Klebemittelsammelstellen bildende Abstandshöcker vorgesehen, die ähnlich ausgebildet sind, wie die in Fig. 2 mit 33 bezeichneten.

Fig. 5 zeigt einen Schnitt durch den Fahrzeugaufbau in seinem vorderen Bereich mit der mittigen Naht 22 zwischen den beiden Halbschalen 12 und 14. Der Grundrahmen 16 weist hierzu in seiner Mitte einen U-förmig ausgebildeten Kanal 34 auf, der Schenkel 36 oder Schenkelteile aufnimmt, die an den waagerecht verlaufenden Abschnitten der beiden Halbschalen 12 und 14 vorgesehen sind, von diesen nach unten weisen und mit einem Klebemittel versehen werden, bevor sie in den Kanal 34, der ebenfalls mit einem Klebemittel versehen werden kann, eingesetzt werden. Diese Verbindung oder Naht 22 dient dazu, die beiden Halbschalen 12 und 14 und den unteren Rahmenteil 16 gegen eine seitliche Verschiebung festzulegen.

Zur Aufnahme der beiden waagerecht verlaufenden Abschnitte der Halbschalen 12 und 14 ist der Grundrahmen 16 ferner noch, wie es aus Fig. 2 und 5 erkennbar ist, mit vier in Fahrzeuglängsrichtung verlaufenden Oberflächen 38 versehen, die mit Gegenflächen 40 an den Halbschalen 12 und 14 verklebt werden. Zwei dieser Oberflächen 38 sind in der Fahrzeugmitte vorgesehen, werden durch den Kanal 34 getrennt und sind mit Abstandshöckern 33 versehen, die, wenn sie verklebt sind, Klebemittelsammelstellen bilden und die Menge Klebemittel, die im Bereich dieser Verbindung aufgenommen werden kann, bestimmen. Je eine Oberfläche 38 ist seitlich neben den mittigen Oberflächen 38 angeordnet und mit einem sich ebenfalls in Fahrzeuglängsrichtung erstreckenden U-förmigen Kanal 39 versehen, die Klebemittelsammelstellen bilden und die Klebstoffmenge zwischen den beiden äußeren Oberflächen 38 und ihren Gegenflächen 40 an den beiden Halbschalen 12 und 14 bestimmen.

Die beiden Halbschalen 12 und 14 sind an ihren vorne liegenden Enden im Bereich einer nach oben weisenden Steuersäule durch die Naht 24 miteinander verbunden, die in den Fig. 1 und 4 dargestellt ist. Die beiden Steuersäulenhälften sind hierzu mit Zungen 42 und 44 versehen, die zwischen sich für die Klebstoffaufnahme einen Spalt 46 bilden. Die Gestaltung der Naht 24 ist ähnlich derjenigen der Naht 20 im rückwärtigen Bereich des Oberteils 26. Falls erforderlich können im Bereich des Spaltes 46 auch noch Abstandshöcker vorgesehen sein, die die Klebstoffmenge bestimmen.

Am Grundrahmen 16 sind ferner noch zwei in Fig. 2 erkennbare, rückwärtige und sich seitlich erstreckende und höher gelegene Verbindungsflächen 48 und 50 vorgesehen, sowie zwei äußere und untere, aus den Fig. 2, 3 und 5 ersichtliche, in Fahrzeuglängsrichtung sich erstreckende und geneigt angeordnete Verbindungsflächen 52 und 54 und noch zwei höher gelegene, ebenfalls schräg angeordnete und in Fahrzeuglängsrichtung sich erstreckende Verbindungsflächen 56 und 58, die aus den Fig. 2 und 3 ersichtlich sind. In seinem vorderen Bereich weist der Grundrahmen 16 zudem noch sich seitlich erstreckende Verbindungsflächen 60, 62 und 64 auf, die aus den Fig. 1 und 7 erkennbar sind. Hierbei können auch die Verbindungsflächen 60 und 62 mit Abstandshöckern 61 und 63 versehen werden, die die Klebemittelmenge regulieren. Auf die weiteren am Grundrahmen 16 noch vorgesehenen Verbindungen 35 und 38 wurde bereits hingewiesen.

Um die beiden Halbschalen 12 und 14 miteinander zu verbinden, kann eine Einspannung vorgesehen werden, in der die beiden Halbschalen solange verbleiben, bis der aufgetragene Klebstoff bindet. Die beiden Schenkel 36 können dabei in geeignete Zwingen oder dergleichen eingespannt werden. Sobald die Nahtstellen 20, 22, 24 am Oberteil 26 fest zusammenhalten, wird der Oberteil 26 derart positioniert, daß er den Grundrahmen 16, der in Fig. 2 dargestellt ist, aufnehmen kann. Hierzu bieten sich verschiedene Verfahren an. Ein geeignetes Verfahren besteht darin, daß der Oberteil 26 einfach umgedreht wird, so daß ein zweckmäßiges Klebemittel in einfacher Weise auf seine Verbindungsflächen aufgetragen werden kann, bevor der Grundrahmen 16 aufgesetzt wird.

Ein Verfahren zum schnellen und einfachen Zusammenfügen des Oberteils 26 mit dem Grundrahmen 16 kann darin bestehen, daß, nachdem der Oberteil umgedreht wurde, die Verbindungsflächen des Oberteils 26, die mit dem Grundrahmen 16 verklebt werden, mit einem geeigneten Klebemittel bestrichen werden. Diese Verbindungsflächen sind im einzelnen zwei unten und seitlich außen liegende geneigt angeordnete und sich in Fahrzeuglängsrichtung erstreckende Flächen 66 und 68 (Fig. 2 und 5) und zwei obere im Bereich eines Fahrersitzes angeordnete, sich in Fahrzeuglängsrichtung erstreckende und geneigt verlaufende Flächen 70, 72, die aus Fig. 3 erkennbar sind. Außerdem wird auf die sich in Fahrzeuglängsrichtung sich erstreckenden Außenseiten der Schenkel 36 Klebemittel aufgetragen, sowie auf rechte und linke höher gelegene und sich seitlich erstreckende Flächen 74 und 76, die in Fig. 1 angedeutet sind. Schließlich ist noch Klebemittel auf die Gegenflächen 40 (Fig. 5) und auf die den Verbindungsflächen 60, 62 und 64 gegenüberliegenden ersten, zweiten und dritten Flächen am Oberteil 26 (Fig. 7) aufzutragen.

Danach wird auch der Grundrahmen 16 umgedreht und auf den auf dem Kopf liegenden Oberteil 26 aufgesetzt. Beim Ablassen des Grundrahmens 16 kommen zunächst die schräg und in Fahrzeuglängsrichtung verlaufenden Verbindungsflächen 52, 54 und 56, 58 des Grundrahmens 16 mit den ebenfalls schräg und in Fahrzeuglängsrichtung verlaufenden Gegenflächen 66, 68 und 70, 72 am Oberteil 26 miteinander in Kontakt. Die entsprechenden Flächen gleiten dann aufeinander, und gleichzeitig kommen die seitlich nach außen verlaufenden Verbindungsflächen 48, 50 am Grundrahmen 16 mit den Flächen 74, 76 am Oberteil 26 in Berührung, und die Schenkel 36 des Oberteils 26 treten in den Kanal 34 am Grundrahmen 26 ein. Sobald die schrägen Verbindungsflächen 52 bis 58 am Grundrahmen 16 ihre endgültige Position auf den Gegenflächen 66 bis 72 an dem Oberteil 26 einnehmen, rasten sie gegenseitig ein oder werden entsprechend verriegelt. Zu diesem Zeitpunkt liegen auch die Verbindungsflächen 38 des Grundrahmens 16 auf den Gegenflächen 40 des Oberteils 26 und die sich seitlich erstreckenden Verbindungsflächen 60, 62 64 des Grundrahmens 16 auf den entsprechenden Gegenflächen am Oberteil 26 an.

Die gegenseitige Verriegelung der Flächen 52 und 66 sowie 54 und 68 ist identisch und in einem vergrößerten Maßstab in Fig. 6 dargestellt, die in strichpuntierten Linien den Grundrahmen 16 in einer Stellung zeigt, in der er noch nicht auf den Oberteil 26 aufgesetzt ist. Wenn der Grundrahmen 16 auf den Oberteil 26 abgelassen wird, dann gleiten die schräg verlaufenden Verbindungsflächen 52 und 54 des Grundrahmens 16 auf den Gegenflächen 66 und 68 am Oberteil 26 nach unten. Ihre nach unten gerichtete Bewegung wird durch je einen Anschlagteil 78 oder eine am Grundrahmen 16 vorgesehene und nach oben gerichtete in Fahrzeuglängsrichtung verlaufende Leiste begrenzt. Aus der Fig. 6 ist ferner noch zu sehen, daß die unteren Enden des Oberteils 26 im Bereich ihrer Flächen 66 und 68 V-förmig ausgebildet sind und einen federelastischen oder flexibel ausgebildeten Feststellteil 80 aufweisen, der mit je einem Verriegelungsteil 82 an den Verbindungsflächen 52, 54 des Grundrahmens 16 in Verbindung treten kann. Der Verriegelungs- oder Schulterteil 82 ist hierzu mit einer Aussparung 84 versehen und der Festellteil 80 biegt sich nach außen aus, wenn er mit dem Verriegelungsteil 82 in Berührung kommt, und schnappt in die Aussparung 84 ein. Da der Oberteil 26 und auch die Feststellteile 80 aus Kunststoff bestehen, können letztere leicht ausbiegen, ohne daß ein Bruch, ein Knicken odgl. zu befürchten wäre. Die Verbindungsflächen 66 und 70 bzw. 68, 72 am Oberteil 16 sind im Bereich des Fahrzeugsitzes durch eine Außenwand miteinander versteift und werden von den Gegenflächen 52, 56 bzw. 54, 58 aufgenommen und zueinander ausgerichtet. Auf diese Weise erfolgt eine einfache und sichere Positionierung.

Die Aussparungen 84 in den Schulterteilen 82 können auch eine ausreichende Menge Klebemittel aufnehmen, um eine dauerhafte Verbindung mit den Feststellteilen 80 zu gewährleisten. Bei dem bevorzugten Ausführungsbeispiel betragen die Spaltenabstände zwischen den miteinander zu verbindenden Flächen mit Ausnahmen der Flächen 64, 88 in Fig. 7 30/1000 Zoll, wenn die entsprechenden Flächen miteinander verklebt sind. Da auch auf die Flächen 66 und 68 ein Klebemittel aufgetragen ist, wird dieses beim Zusammenfügen von Oberteil 26 und Grundrahmen nach außen in den Bereich der Anschlagteile 78 gedrückt, den Raum 79 füllen und die Endkanten 81 der als Zungen ausgebildeten Verbindungsflächen 66 und 68 umgeben, wie es aus Fig. 6 erkennbar ist. Hierdurch können sich die Enden 81 nicht losschälen. Eine zusätzliche weitere Verbindung ist hierdurch gewährleistet.

Beim Zusammenfügen der sich im Fahrzeuglängsrichtung erstreckenden Verbindungsflächen tragen die Aussparungen 84 und Schlitze 86 und auch die quer verlaufenden Verbindungsflächen 48, 50 mit dazu bei, daß der Oberteil 26 auf dem Grundrahmen 16 in Fahrzeuglängsrichtung richtig positioniert ist und festgestellt wird. Die sich seitlich erstreckenden unteren Verbindungsflächen 60, 62, 64 am Grundrahmen 16 kommen gegen die entsprechenden Gegenflächen im vorderen Bereich des Oberteils 26 zur Anlage, wobei der Oberteil an der unten liegenden Vorderkante noch mit einer Lippe 88 versehen ist, die auf der Fläche 64 anliegt, eine vertikale Orientierung ermöglicht und eine Arretierung in Fahrzeuglängsrichtung gestattet. Eine nach unten gerichtete Bewegung des Oberteils 26 wird durch die Verbindungsflächen 38 und 40 und durch die auf der Fläche 64 sich abstützende Lippe 88 begrenzt. Alle diese Teile sind miteinander verklebt.

## Patentansprüche

1. Fahrzeugaufbau mit einem Oberteil (26) und einem Grundrahmenteil (16), die aus einem Kunststoff bestehen und miteinander verbindbar sind, wobei die Verbindungsmittel aus mindestens einem Schenkelteil (36) und einem Kanal (34) bestehen, wobei der Schenkelteil (36) in den Kanal (34) einsetzbar, mit diesem verklebbar und am Oberteil (26) oder am Grundrahmenteil (16) vorgesehen ist, während der Kanal (34) am Grundrahmenteil (16) oder am Oberteil (26) vorgesehen ist, dadurch gekennzeichnet, daß im Bereich von Außenkanten des Oberteils (26) und des Grundrahmenteils (16) und mit Abstand zu dem Schenkelteil (36) und dem Kanal (34) an dem Oberteil (26) oder dem Grundrahmenteil (16) Verriegelungsschultern (82), an dem Grundrahmenteil (16) oder an dem Oberteil (26) flexible Feststellteile (80) und an dem Oberteil (26) und an dem Grundrahmenteil (16) geneigt angeordnete und sich in Fahrzeuglängsrichtung erstreckende Flächen (52, 54 und 66, 68) vorgesehen sind, die in einem spitzen Winkel von den Verriegelungsschultern (82) bzw. von den Feststellteilen (80) abstehen, um V-förmige Verbindungsflächen zu bilden, die im montierten Zustand ineinandergreifen und miteinander verbindbar sind, wobei die geneigt angeordneten Flächen (52, 54 und 66, 68) im montierten Zustand zueinander parallel verlaufen und miteinander verklebt sind.

2. Fahrzeugaufbau nach Anspruch 1, dadurch gekennzeichnet, daß ein erster und ein zweiter in den Kanal (34) einsetzbarer Schenkelteil (36) vorgesehen sind, wobei zwischen den Schenkelteilen (36) ein Klebemittel aufnehmender Sammelraum vorgesehen ist.

3. Fahrzeugaufbau nach Anspruch 1, dadurch gekennzeichnet, daß ein Klebemittel aufnehmender Sammelraum zwischen der Verriegelungsschulter (82) und dem Feststellteil (80) vorgesehen ist.

4. Fahrzeugaufbau nach Anspruch 1, dadurch gekennzeichnet, daß der Grundrahmenteil (16) aus einem Fiber verstärkten Kunststoff besteht.

5. Fahrzeugaufbau nach einem oder mehreren der vorherigen Ansprüche, dadurch gekennzeichnet, daß zwischen Verriegelungsschulter (82) und Feststellteil (80) ein deren gegenseitige Bewegung begrenzender Anschlagteil (78) vorgesehen ist.

6. Fahrzeugaufbau nach Anspruch 1, dadurch gekennzeichnet, daß ein erster und ein zweiter Satz Verriegelungsschultern (82) und Feststellteile (80) vorgesehen ist und jeder Satz mit seitlichem Abstand zu einer Längsmittelebene des Fahrzeugaufbaues angeordnet ist.

7. Fahrzeugaufbau nach Anspruch 2, dadurch gekennzeichnet, daß der Kanal (34) U-förmig ausgebildet, in der Längsmittelebene des Grundrahmenteils (16) vorgesehen und bodenwärts geschlossen ist, wobei die Schenkelteile (36) an dem Oberteil (26) vorgesehen sind und von diesem aus gesehen nach unten weisen.

8. Fahrzeugaufbau nach Anspruch 7, dadurch gekennzeichnet, daß in dem Kanal (34) ein Klebemittel aufnehmender Sammelraum vorgesehen ist.

9. Fahrzeugaufbau nach einem oder mehreren der vorherigen Ansprüche, dadurch gekennzeichnet, daß im frontseitigen Bereich des Oberteils (26) und des Grundrahmenteils (16) erste und zweite und dritte, zueinander Längsabstand aufweisende und sich seitlich erstreckende Verbindungsflächen (60, 62, 64) vorgesehen sind, wobei die ersten und zweiten Verbindungsflächen (60, 62) Abstandshöcker (61, 63) zur Kontrolle der Klebstoffmenge aufweisen, während die dritten Verbindungsflächen (64) im wesentlichen flach ausgebildet sind.

10. Fahrzeugaufbau nach einem oder mehreren der vorherigen Ansprüche, dadurch gekennzeichnet, daß der Oberteil (26) und der Grundrahmenteil (16) sich im wesentlichen vertikal und in Fahrzeugaufbaulängsrichtung erstreckende Verbindungsflächen (56, 70 und 58, 72) aufweisen, die gegeneinander anliegen und zu einer Längsmittelebene des Fahrzeugaufbaus seitlichen Abstand aufweisen.

11. Fahrzeugaufbau nach einem oder mehreren der vorherigen Ansprüche, dadurch gekennzeichnet, daß zwischen den sich im wesentlichen vertikal erstreckenden Verbindungsflächen ein Rastzahn und eine Nut (86) vorgesehen sind.

12. Fahrzeugaufbau nach Anspruch 3, dadurch gekennzeichnet, daß jede Verriegelungsschulter (82) mit einer schräg nach außen geneigten Verbindungsfläche (52, 54) und jeder Feststellteil (80) mit einer schräg nach innen geneigten Verbindungsfläche (66, 68) versehen ist, die in Fahrzeugaufbaulängsrichtung sich erstrecken, gegeneinander anliegen und zur Fahrzeugaufbaulängsmittelebene seitlichen Abstand aufweisen.

13. Fahrzeugaufbau nach einem oder mehreren der vorherigen Ansprüche, dadurch gekennzeichnet, daß der Oberteil (26) aus zwei Halbschalen (12 und 14) besteht, die jeweils einen nach unten weisenden Schenkelteil (36) aufweisen, die miteinander verklebbar sind.

14. Fahrzeugaufbau nach einem oder mehreren der vorherigen Ansprüche, dadurch gekennzeichnet, daß der Oberteil (26) mit einer geteilten und nach oben weisenden Steuersäule versehen ist, die sich überlappende und miteinander verklebbare Zungen (42, 44) aufweisen.

15. Fahrzeugaufbau nach einem oder mehreren der vorherigen Ansprüche, dadurch gekennzeichnet, daß die sich im wesentlichen vertikal erstreckenden Verbindungsflächen (56, 58) am Grundrahmenteil (16) durch eine quer verlaufende Wand an ihrem rückwärtigen Ende stabilisiert sind, die seitliche Verbindungsflächen (48, 50) aufweist, die gegen Verbindungsflächen (74, 76) am Oberteil (26) anliegen.

16. Fahrzeugaufbau nach einem oder mehreren der vorherigen Ansprüche, dadurch gekennzeichnet, daß beiderseits des U-förmigen Kanals (34) je eine in Fahrzeuglängsrichtung verlaufende und im wesentlichen waagerechte Verbindungsfläche (38) und mit seitlichem Abstand zu diesen Verbindungsflächen noch je eine weitere sich in Fahrzeugaufbaulängsrichtung erstreckende Verbindungsfläche (38) vorgesehen ist, wobei die beiden außen liegenden Verbindungsflächen einen Kanal (39) für Klebemittel aufweisen und alle vier Verbindungsflächen mit Gegenflächen am Oberteil (26) verbindbar sind.

17. Fahrzeugaufbau nach einem oder mehreren der vorherigen Ansprüche, dadurch gekennzeichnet, daß die sich im wesentlichen vertikal erstreckenden Verbindungsflächen (56, 58) am Grundrahmenteil (16) oberhalb der V-förmig oder etwa V-förmig ausgebildeten Verriegelungsschultern (82) nach innen versetzt angeordnet sind, wobei die Verbindungsflächen (66, 68) der Feststellteile (80) über je eine Außenwand mit ihren gegen die sich im wesentlichen vertikal erstreckenden Verbindungsflächen (56, 58) anliegenden Verbindungsflächen (70, 72) verbunden sind, die an ihren unteren Ende in die Feststellteile (80) ausläuft, die bis zu den frontseitigen und quer verlaufenden Verbindungsflächen (60) sich nach vorne erstrecken.

## Claims

1. A vehicle body with an upper part (26) and a base frame part (16), which consist of plastics material and can be connected together, wherein the connecting means consist of at least one leg part (36) and a channel (34), wherein the leg part (36) can be fitted into the channel (34) and be bonded thereto and is provided on the upper part (26) or on the base frame part (16), while the channel (34) is provided in the base frame part (16) or in the upper part (26), characterized in that locking shoulders (82) are provided on the upper part (26) or on the base frame part (16) in the region of the outer edges of the upper part (26) and the base frame part (16) and at a distance from the leg part (36) and the channel (34), flexible securing parts (80) are provided on the base frame part (16) or on the upper part (26) and inclined surfaces (52, 54 and 66, 68) are provided on the upper part (26) and the base frame part (16), and extending in the longitudinal direction of the vehicle, which surfaces project at an acute angle from the locking shoulders (82) or from the securing parts (80) in order to form V-shaped joint surfaces which engage within each other in the assembled state and can be connected together, wherein the inclined surfaces (52, 54 and 66, 68) run parallel to one another in the assembled state and are bonded together.

2. A vehicle body according to claim 1, characterized in that first and second leg parts (36) insertable into the channel (34) are provided, an adhesive reservoir being provided between the leg parts (36).

3. A vehicle body according to claim 1, characterized in that an adhesive reservoir is provided between the locking shoulder (82) and the securing part (80).

4. A vehicle body according to claim 1, characterized in that the base frame part (16) consists of a fibre-reinforced plastics material.

5. A vehicle body according to one or more of the preceding claims, characterized in that a stop part (78) is provided between the locking shoulder (82) and the securing part (80) to limit their mutual movement.

6. A vehicle body according to claim 1, characterized in that first and second sets of locking shoulders (82) and securing parts (80) are provided and each set is arranged laterally spaced from a longitudinal central plane of the vehicle body.

7. A vehicle body according to claim 2, characterized in that the channel (34) is of U shape, is provided in the longitudinal central plane of the base frame part (16) and is closed at the bottom, while the leg parts (36) are provided on the upper part (26) and project downwards therefrom.

8. A vehicle body according to claim 7, characterized in that an adhesive reservoir is provided in the channel (34).

9. A vehicle body according to one or more of the preceding claims, characterized in that first, second and third joint surfaces (60, 62, 64) are provided in the front region of the upper part (26) and the base frame part (16), with longitudinal spacing therebetween and extending laterally, wherein the first and second joint surfaces (60, 62) have spacer humps (61, 63) to control the amount of adhesive while the third joint surface (64) is of substantially flat form.

10. A vehicle body according to one or more of the preceding claims, characterized in that the upper part (26) and the base frame part (16) have substantially vertical joint surfaces (56, 70 and 58, 72) extending in the longitudinal direction of the vehicle body, which bear against each other and are laterally spaced from a longitudinal central plane of the vehicle body.

11. A vehicle body according to one or more of the preceding claims, characterized in that a detent tooth and a slot (86) are provided between the substantially vertical joint surfaces.

12. A vehicle body according to claim 3, characterized in that each locking shoulder (82) is provided with an oblique outwardly inclined joint surface (52, 54) and each securing part (80) is provided with an oblique inwardly inclined joint surface (66, 68), which surfaces extend in the longitudinal direction of the vehicle body, bear against each other and are laterally spaced from the longitudinal central plane of the vehicle body.

13. A vehicle body according to one or more of the preceding claims, characterized in that the upper part (26) consists of two half shells (12 and 14) which each have a downwardly directed leg part (36) and which can be bonded together.

14. A vehicle body according to one or more of the preceding claims, characterized in that the upper part (26) is provided with a divided and upwardly pointing steering column which has overlapping tongues (42, 44) which can be bonded together.

15. A vehicle body according to one or more of the preceding claims, characterized in that the substantially vertically extending joint surfaces (56, 58) on the base frame part (16) are stabilised by a transversely extending wall at their rear ends, which wall has lateral joint surfaces (48, 50) which bear against joint surfaces (74, 76) on the upper part (26).

16. A vehicle body according to one or more of the preceding claims, characterized in that on each of the two sides of the U-shaped channel (34) there is provided a substantially horizontal joint surface (38) running in the longitudinal direction of the vehicle and laterally spaced therefrom a further joint surface (38) running in the longitudinal direction of the vehicle body, wherein the two outer lying joint surfaces have a channel (39) for adhesive and all four joint surfaces can be connected to complementary surfaces on the upper part (26).

17. A vehicle body according to one or more of the preceding claims, characterized in that the substantially vertically extending joint surfaces (56, 58) on the base frame part (16) are arranged inwardly offset above the V-shaped or approximately V-shaped locking shoulders (82), wherein the joint surfaces (66, 68) of the securing parts (80) are each connected by an outer wall to their joint surfaces (70, 72) bearing against the substantially vertically extending joint surfaces (56, 58), the outer walls run out at their lower ends into the securing parts (80), which extend forwards to the front, transversely running joint surfaces (60).

## Revendications

1. Carrosserie de véhicule comportant une partie supérieure (26) et une partie formant châssis de base (16), qui sont réalisées en matière plastique et peuvent être reliées entre elles, et dans laquelle les moyens de liaison sont constitués par au moins une partie en forme de branche (36) et par un canal (34), la partie en forme de branche (36) pouvant être insérée dans le canal (34) et collée dans ce dernier et étant prévue sur la partie supérieure (26) ou sur la partie formant châssis de base (16), tandis que le canal (34) est prévu dans la partie formant châssis de base (16) ou dans la partie supérieure (26), caractérisée en ce que des épaulements de verrouillage (82) sont prévus dans la zone de bords extérieurs de la partie supérieure (26) et de la partie formant châssis de base (16) et à distance de la partie formant branche (36) et du canal (34) dans la partie supérieure (26) ou dans la partie formant châssis de base (16), que des parties flexibles de fixation (80) sont prévues sur la partie formant châssis de base (16) ou sur la partie supérieure (26) et que des surfaces inclinées (52, 54 et 66,68), qui s'étendent dans la direction longitudinale du véhicule, sont prévues sur la partie supérieure (26) et sur la partie formant châssis de base (16), ces surfaces faisant saillie, sous un angle aigu, par rapport aux épaulements de verrouillage (82) ou aux parties de fixation (80) de manière à former des surfaces de liaison en forme de V, qui, à l'état monté, s'engagent l'une dans l'autre et peuvent être reliées entre elles, les surfaces inclinées (52,54 et 66,68) étant parallèles à l'état monté et étant collées entre elles.

2. Carrosserie de véhicule selon la revendication 1, caractérisée en ce qu'il est prévu des première et seconde parties formant branches (36) pouvant être insérées dans le canal (34), un espace de collecte recevant un adhésif étant prévu entre les parties formant branches (36).

3. Carrosserie de véhicule selon la revendication 1, caractérisée en ce qu'un espace de collecte, qui reçoit un adhésif, est prévu entre l'épaulement de verrouillage (82) et la partie de fixation (80).

4. Carrosserie de véhicule selon la revendication 1, caractérisée en ce que la partie formant châssis de base (16) est constituée par une matière plastique renforcée par des fibres.

5. Carrosserie de véhicule selon une ou plusieurs des revendications précédentes, caractérisée en ce qu'entre l'épaulement de verrouillage (82) et la partie de fixation (80) est prévu un élément de butée (78) qui limite le déplacement réciproque de l'épaulement et de la partie de fixation.

6. Carrosserie de véhicule selon la revendication 1, caractérisée en ce qu'il est prévu des premier et second ensembles d'épaulements de verrouillage (82) et de parties de fixation (80) et que chaque ensemble est disposé à une distance latérale d'un plan médian longitudinal de la carrosserie du véhicule.

7. Carrosserie de véhicule selon la revendication 2, caractérisée en ce que le canal (34) est réalisé en forme de U, est prévu dans le plan médian longitudinal de la partie formant châssis de base (16) et est fermé au niveau de son fond, les parties formant branches (36) étant prévues sur la partie supérieure (26) et s'étendant vers le bas à partir de cette dernière.

8. Carrosserie de véhicule selon la revendication 7, caractérisée en ce qu'un espace de collecte recevant un adhésif est prévu dans le canal (34).

9. Carrosserie de véhicule selon une ou plusieurs des revendications précédentes, caractérisée en ce que des première, seconde et troisième surfaces latérales de liaison (60,62,64), qui sont séparées par une distance longitudinale, sont prévues sur le côté avant de la partie supérieure (26) et de l'élément formant châssis de base (16), les première et seconde surfaces de liaison (60, 62) possédant des bossages formant entretoises (61,63) servant à contrôler la quantité d'adhésif, tandis que les troisièmes surfaces de liaison (64) sont essentiellement planes.

10. Carrosserie de véhicule selon une ou plusieurs des revendications précédentes, caractérisée en ce que la partie supérieure (26) et la partie formant châssis de base (16) possèdent des surfaces de liaison (56, 70 et 58,72) qui s'étendent essentiellement verticalement et dans la direction longitudinale de la carrosserie du véhicule, s'appliquent l'une contre l'autre et sont séparées par une distance latérale d'un plan médian longidudinal de la carrosserie du véhicule.

11. Carrosserie de véhicule selon une ou plusieurs des revendications précédentes, caractérisée en ce qu'une dent d'encliquetage et une rainure (86) sont prévues entre les surfaces de liaison qui s'étendent essentiellement verticalement.

12. Carrosserie de véhicule selon la revendication 3, caractérisée en ce que chaque épaulement de verrouillage (82) est pourvu d'une surface de liaison (52,54) inclinée obliquement vers l'extérieur et que chaque partie de fixation (80) est pourvue d'une surface de liaison (66,68) inclinée obliquement vers l'intérieur, ces surfaces de liaison s'étendant dans la direction longitudinale de la carrosserie du véhicule, s'appliquant l'une contre l'autre et étant séparées par une distance latérale du plan médian longitudinal de la carrosserie du véhicule.

13. Carrosserie de véhicule selon une ou plusieurs des revendications précédentes, caractérisée en ce que la partie supérieure (26) est constituée de deux demi-coques (12 et 14), qui possèdent respectivement une partie formant branche (36) dirigée vers le bas, ces parties formant branches pouvant être réunies par collage.

14. Carrosserie de véhicule selon une ou plusieurs des revendications précédentes, caractérisée en ce que la partie supérieure (26) est équipée d'une colonne de commande divisée, qui est tournée vers le haut et possède des languettes (42,44), qui sont en chevauchement et peuvent être réunies par collage.

15. Carrosserie de véhicule selon une ou plusieurs des revendications précédentes, caractérisée en ce que les surfaces de liaison (56,58), qui s'étendent essentiellement verticalement sur la partie formant châssis de base (16), sont stabilisées par une paroi transversale située au niveau de leur extrémité arrière et qui comporte des surfaces latérales de liaison (48,50), qui s'appliquent contre les surfaces de liaison (74,76) présentes sur la partie supérieure (26).

16. Carrosserie de véhicule selon une ou plusieurs des revendications précédentes, caractérisée en ce que des deux côtés du canal (34) en forme de U sont prévues respectivement une surface de liaison (38) qui s'étend dans la direction longitudinale du véhicule et est essentiellement horizontale, et en outre à une distance latérale de ces surfaces de liaison, respectivement une autre surface de liaison (38) qui s'étend dans la direction longitudinale de la carrosserie du véhicule, les deux surfaces de liaison situées à l'extérieur possédant un canal (39) pour un adhésif, et l'ensemble des quatre surfaces de liaison pouvant être reliées à des surfaces opposées situées sur la partie supérieure (26).

17. Carrosserie de véhicule selon une ou plusieurs des revendications précédentes, caractérisée en ce que les surfaces de liaison (56,58), qui s'étendent essentiellement verticalement et sont situées sur la partie formant châssis de base (16), sont disposées en étant décalées vers l'intérieur au-dessus des épaulements de verrouillage (82) réalisés en forme de V ou approximativement en forme de V, les surfaces de liaison (66,68) des parties de fixation (80) étant reliées, par l'intermédiaire respectivement d'une paroi extérieure, aux surfaces de liaison (70,72) qui sont appliquées contre les surfaces de liaison (56,58) qui s'étendent essentiellement verticalement, la paroi extérieure se terminant, au niveau de son extrémité inférieure, dans les parties de fixation (80), qui s'étendent vers l'avant jusqu'aux surfaces transversales avant de liaison (60).
